# EUROPEAN PATENT APPLICATION

(11) **EP 4 287 308 A1**
(43) Date of publication of application: **06.12.2023**
(21) Application number: 22745557.3
(22) Date of filing: 07.01.2022
(51) Int. Cl.: H01M 4/134, H01M 4/139, H01M 4/62

(54) **CONDUCTIVE MATERIAL PASTE FOR ELECTROCHEMICAL ELEMENT ELECTRODES, SLURRY COMPOSITION FOR ELECTROCHEMICAL ELEMENT ELECTRODES, ELECTRODE FOR ELECTROCHEMICAL ELEMENTS, ELECTROCHEMICAL ELEMENT, AND METHOD FOR PRODUCING CONDUCTIVE MATERIAL PASTE FOR ELECTROCHEMICAL ELEMENT ELECTRODES**

(30) Priority: 29.01.2021 JP 2021013869
(71) Applicant: Zeon Corporation, Tokyo 100-8246 (JP)
(72) Inventor: ADACHI, Yusuke, Tokyo 100-8246 (JP); SONOBE, Kenya, Tokyo 100-8246 (JP)
(74) Representative: Maiwald GmbH
(86) International application number: PCT/JP2022/000424
(87) International publication number: WO 2022/163330

(57) **Abstract**

Provided is a conductive material paste for an electrochemical device electrode with which it is possible to produce a slurry composition that has excellent viscosity stability and can cause an electrochemical device to display excellent cycle characteristics. The conductive material paste contains a fibrous conductive carbon, a triazine skeleton-containing compound, a water-soluble polymer, and water. The amount of the triazine skeleton-containing compound is not less than 1 part by mass and not more than 50 parts by mass per 100 parts by mass of the fibrous conductive carbon, and the amount of the water-soluble polymer is not less than 1 part by mass and not more than 50 parts by mass per 100 parts by mass of the fibrous conductive carbon.

## Description

### TECHNICAL FIELD

The present disclosure relates to a conductive material paste for an electrochemical device electrode, a slurry composition for an electrochemical device electrode, an electrode for an electrochemical device, an electrochemical device, and a method of producing a conductive material paste for an electrochemical device electrode.

### BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide variety of applications. An electrode for an electrochemical device may include a current collector and an electrode mixed material layer formed by drying a slurry composition for an electrochemical device electrode on the current collector, for example.

In recent years, fibrous conductive carbons such as carbon nanotubes (hereinafter, also abbreviated as "CNTs") have been used as conductive materials in the formation of electrode mixed material layers. A technique of premixing a fibrous conductive carbon and a dispersant to obtain a conductive material paste for an electrochemical device electrode and then combining the obtained conductive material paste with an electrode active material to produce a slurry composition for an electrochemical device electrode has been proposed for use in formation of an electrode mixed material layer using a fibrous conductive carbon in order to obtain an electrode mixed material layer in which the fibrous conductive carbon is dispersed well (for example, refer to Patent Literature (PTL) 1 and 2).

### CITATION LIST

### Patent Literature

PTL 1: JP2020-11872A
PTL 2: WO2012/133030A1

### SUMMARY

### (Technical Problem)

However, there is demand for enhancing physical properties of a slurry composition obtained using a conductive material paste while also improving device characteristics of an electrochemical device in the conventional technique described above. More specifically, there is demand for inhibiting viscosity change of a slurry composition upon long-term storage (i.e., ensuring viscosity stability of the slurry composition) while also causing an electrochemical device to display excellent cycle characteristics in the conventional technique described above.

Accordingly, one object of the present disclosure is to provide a conductive material paste for an electrochemical device electrode with which it is possible to produce a slurry composition that has excellent viscosity stability and can cause an electrochemical device to display excellent cycle characteristics, and also to provide a method of producing this conductive material paste for an electrochemical device electrode.

Another object of the present disclosure is to provide a slurry composition for an electrochemical device electrode that has excellent viscosity stability and can cause an electrochemical device to display excellent cycle characteristics.

Another object of the present disclosure is to provide an electrode for an electrochemical device that can cause an electrochemical device to display excellent cycle characteristics.

Another object of the present disclosure is to provide an electrochemical device that has excellent cycle characteristics.

### (Solution to Problem)

The inventors conducted diligent investigation with the aim of solving the problem set forth above. The inventors discovered that by using a specific amount of a triazine skeleton-containing compound and a specific amount of a water-soluble polymer in production of a conductive material paste having a fibrous conductive carbon dispersed as a conductive material in a dispersion medium including water, it is possible to ensure viscosity stability of a slurry composition produced using the conductive material paste while also causing an electrochemical device to display excellent cycle characteristics through an electrode that includes an electrode mixed material layer formed from the slurry composition, and, in this manner, the inventors completed the present disclosure.

Specifically, the present disclosure aims to advantageously solve the problem set forth above, and a presently disclosed conductive material paste for an electrochemical device electrode comprises a fibrous conductive carbon, a triazine skeleton-containing compound, a water-soluble polymer, and water, wherein an amount of the triazine skeleton-containing compound is not less than 1 part by mass and not more than 50 parts by mass per 100 parts by mass of the fibrous conductive carbon, and an amount of the water-soluble polymer is not less than 1 part by mass and not more than 50 parts by mass per 100 parts by mass of the fibrous conductive carbon. By using a conductive material paste that contains a fibrous conductive carbon, a triazine skeleton-containing compound, a water-soluble polymer, and water and in which the amounts of the triazine skeleton-containing compound and the water-soluble polymer are within the ranges set forth above in this manner, it is possible to produce a slurry composition having excellent viscosity stability and an electrode that can cause an electrochemical device to display excellent cycle characteristics.

Note that the term "water-soluble polymer" as used in the present disclosure refers to a polymer for which insoluble content is less than 1.0 mass% when 0.5 g of the polymer is dissolved in 100 g of water at a temperature of 25°C.

In the presently disclosed conductive material paste for an electrochemical device electrode, the fibrous conductive carbon preferably includes carbon nanotubes. When CNTs are used as the fibrous conductive carbon, cycle characteristics of an electrochemical device can be further improved.

In the presently disclosed conductive material paste for an electrochemical device electrode, the fibrous conductive carbon preferably has a BET specific surface area of not less than 10 m²/g and not more than 400 m²/g. When the BET specific surface area of the fibrous conductive carbon is within the range set forth above, viscosity stability of a slurry composition and cycle characteristics of an electrochemical device can be further improved. Moreover, viscosity change upon long-term storage of the conductive material paste can be inhibited (i.e., dispersion stability of the conductive material paste can be ensured) while also causing an electrode mixed material layer formed from a slurry composition to closely adhere strongly to a current collector (i.e., peel strength of an electrode can be increased).

Note that the "BET specific surface area" of a fibrous conductive carbon referred to in the present disclosure is the BET specific surface area according to a nitrogen adsorption method and can be measured in accordance with ASTM D3037-81.

In the presently disclosed conductive material paste for an electrochemical device electrode, the fibrous conductive carbon preferably has an average length of not less than 1.0 µm and not more than 60.0 µm. When the average length of the fibrous conductive carbon is within the range set forth above, viscosity stability of a slurry composition and cycle characteristics of an electrochemical device can be further improved. Moreover, dispersion stability of the conductive material paste can be increased while also improving peel strength of an electrode.

Note that the "average length" of a fibrous conductive carbon referred to in the present disclosure can be determined by measuring the lengths of 20 randomly selected fibers of the fibrous conductive carbon in a scanning electron microscope (SEM) image and then calculating an average value of the measured lengths.

In the presently disclosed conductive material paste for an electrochemical device electrode, the fibrous conductive carbon preferably has an aspect ratio of not less than 50 and not more than 1,000. When the aspect ratio of the fibrous conductive carbon is within the range set forth above, viscosity stability of a slurry composition and cycle characteristics of an electrochemical device can be further improved. Moreover, dispersion stability of the conductive material paste can be improved.

Note that the "aspect ratio" of a fibrous conductive carbon referred to in the present disclosure can be determined by measuring the lengths and diameters of 20 randomly selected fibers of the fibrous conductive carbon in an SEM image and then calculating an average value of the ratio of diameter and length (length/diameter).

In the presently disclosed conductive material paste for an electrochemical device electrode, the water-soluble polymer preferably includes a carboxy group-containing monomer unit in a proportion of not less than 1 mass% and not more than 50 mass% when all monomer units of the water-soluble polymer are taken to be 100 mass%. When a water-soluble polymer having a proportional content of carboxy group-containing monomer units that is within the range set forth above is used, viscosity stability of a slurry composition and cycle characteristics of an electrochemical device can be further improved. Moreover, dispersion stability of the conductive material paste can be improved.

Note that when a polymer is said to "include a monomer unit" in the present disclosure, this means that "a polymer obtained using that monomer includes a repeating unit derived from the monomer".

Also note that the proportional content of a monomer unit in a polymer referred to in the present disclosure can be measured by a nuclear magnetic resonance (NMR) method such as ¹H-NMR or ¹³C-NMR.

In the presently disclosed conductive material paste for an electrochemical device electrode, the triazine skeleton-containing compound preferably has a molecular weight of 500 or less. When a triazine skeleton-containing compound having a molecular weight that is not more than the value set forth above is used, viscosity stability of a slurry composition can be further improved. Moreover, dispersion stability of the conductive material paste can be increased.

In the presently disclosed conductive material paste for an electrochemical device electrode, the triazine skeleton-containing compound preferably includes one or more functional groups selected from the group consisting of an amino group, a hydroxy group, a cyano group, and a thiol group. When the triazine skeleton-containing compound includes at least any one of the functional groups set forth above, viscosity stability of a slurry composition can be further improved.

Moreover, the present disclosure aims to advantageously solve the problem set forth above, and a presently disclosed slurry composition for an electrochemical device electrode comprises: an electrode active material; and any one of the conductive material pastes for an electrochemical device electrode set forth above. A slurry composition that contains an electrode active material and any one of the conductive material pastes set forth above has excellent viscosity stability and can cause an electrochemical device to display excellent cycle characteristics when this slurry composition is used to produce an electrode.

In the presently disclosed slurry composition for an electrochemical device electrode, the electrode active material preferably includes an active material containing silicon. When an active material that contains silicon (silicon-based negative electrode active material) is used as the electrode active material, the capacity of an electrochemical device that includes an obtained electrode (negative electrode) can be increased.

Furthermore, the present disclosure aims to advantageously solve the problem set forth above, and a presently disclosed electrode for an electrochemical device comprises an electrode mixed material layer formed using any one of the slurry compositions for an electrochemical device electrode set forth above. Through an electrode that includes an electrode mixed material layer formed using any one of the slurry compositions set forth above, it is possible to cause an electrochemical device to display excellent cycle characteristics.

Also, the present disclosure aims to advantageously solve the problem set forth above, and a presently disclosed electrochemical device comprises the electrode for an electrochemical device set forth above. An electrochemical device that includes the electrode set forth above has excellent cycle characteristics.

Moreover, the present disclosure aims to advantageously solve the problem set forth above, and a presently disclosed method of producing a conductive material paste for an electrochemical device electrode comprises a step of mixing a fibrous conductive carbon, not less than 1 part by mass and not more than 50 parts by mass of a triazine skeleton-containing compound per 100 parts by mass of the fibrous conductive carbon, not less than 1 part by mass and not more than 50 parts by mass of a water-soluble polymer per 100 parts by mass of the fibrous conductive carbon, and water. By producing a conductive material paste through mixing of a fibrous conductive carbon, a triazine skeleton-containing compound, a water-soluble polymer, and water such that the amounts of the triazine skeleton-containing compound and the water-soluble polymer are within the ranges set forth above in this manner, it is possible to produce a slurry composition that has excellent viscosity stability and an electrode that can cause an electrochemical device to display excellent cycle characteristics by using this conductive material paste.

For the presently disclosed method of producing a conductive material paste for an electrochemical device electrode, the step of mixing preferably includes: a step of producing a premix containing the fibrous conductive carbon, the triazine skeleton-containing compound, and the water; and a step of adding the water-soluble polymer to the premix. By producing the conductive material paste by the procedure set forth above, viscosity stability of a slurry composition can be further improved.

### (Advantageous Effect)

According to the present disclosure, it is possible to provide a conductive material paste for an electrochemical device electrode with which it is possible to produce a slurry composition that has excellent viscosity stability and can cause an electrochemical device to display excellent cycle characteristics, and also to provide a method of producing this conductive material paste for an electrochemical device electrode.

Moreover, according to the present disclosure, it is possible to provide a slurry composition for an electrochemical device electrode that has excellent viscosity stability and can cause an electrochemical device to display excellent cycle characteristics.

Furthermore, according to the present disclosure, it is possible to provide an electrode for an electrochemical device that can cause an electrochemical device to display excellent cycle characteristics.

Also, according to the present disclosure, it is possible to provide an electrochemical device that has excellent cycle characteristics.

### DETAILED DESCRIPTION

The following provides a detailed description of embodiments of the present disclosure.

The presently disclosed conductive material paste for an electrochemical device electrode is used as a material in production of a slurry composition for an electrochemical device electrode. Note that the presently disclosed conductive material paste for an electrochemical device electrode can be produced by the presently disclosed method of producing a conductive material paste for an electrochemical device electrode. The presently disclosed slurry composition for an electrochemical device electrode is produced using the presently disclosed conductive material paste for an electrochemical device electrode. Moreover, the presently disclosed electrode for an electrochemical device includes an electrode mixed material layer formed using the presently disclosed slurry for an electrochemical device electrode. Furthermore, the presently disclosed electrochemical device includes the presently disclosed electrode for an electrochemical device.

### (Conductive material paste for electrochemical device electrode)

The presently disclosed conductive material paste is a composition having a fibrous conductive carbon, a triazine skeleton-containing compound, and a water-soluble polymer dispersed and/or dissolved in a dispersion medium including water. The conductive material paste may optionally contain components other than the fibrous conductive carbon, the triazine skeleton-containing compound, the water-soluble polymer, and the dispersion medium (i.e., other components). Note that the conductive material paste does not normally contain an electrode active material (positive electrode active material or negative electrode active material).

The presently disclosed conductive material paste contains the triazine skeleton-containing compound in an amount of 1 part by mass to 50 parts by mass and contains the water-soluble polymer in an amount of 1 part by mass to 50 parts by mass per 100 parts by mass of the fibrous conductive carbon. By using a conductive material paste such as set forth above, it is possible to produce a slurry composition having excellent viscosity stability and an electrode that can cause an electrochemical device to display excellent cycle characteristics.

Although it is not clear why the presently disclosed conductive material paste displays these effects, the reason for this is presumed to be as follows based on studies conducted by the inventors.

Firstly, the water-soluble polymer contained in the conductive material paste functions as a dispersant that adsorbs to and causes dispersion of the fibrous conductive carbon in a dispersion medium such as water. However, a slurry composition produced through mixing of the conductive material paste and an electrode active material may experience thickening upon long-term storage. This thickening is thought to be caused by detachment of the water-soluble polymer from the surface of the fibrous conductive carbon. More specifically, at least some of the water-soluble polymer that is adsorbed to the surface of the fibrous conductive carbon may detach from the fibrous conductive carbon and adsorb to the electrode active material during long-term storage of the slurry composition, resulting in numerous regions where the water-soluble polymer has detached being present at the surface of the fibrous conductive carbon. These regions at the surface of the fibrous conductive carbon where the water-soluble polymer has detached are thought to form a network structure with other components (for example, a binder and a thickener) in the slurry composition through hydrophobic interactions, and this network structure is thought to bring about thickening of the slurry composition.

In response to this, the presently disclosed conductive material paste contains a triazine skeleton-containing compound in addition to the fibrous conductive carbon serving as a conductive material and the water-soluble polymer serving as a dispersant. The use of this triazine skeleton-containing compound is thought to enable inhibition of thickening over time of a slurry composition. This is presumed to be due to the water-soluble polymer adsorbing even more strongly to the surface of the fibrous conductive carbon through the triazine skeleton-containing compound, and thus detachment of the water-soluble polymer from the surface of the fibrous conductive carbon being inhibited.

Moreover, as a result of the presently disclosed conductive material paste having a quantitative ratio of the water-soluble polymer relative to the fibrous conductive carbon and a quantitative ratio of the triazine skeleton-containing compound relative to the fibrous conductive carbon that are each not less than a specific value, it is possible to cause good dispersion of the fibrous conductive carbon in a slurry composition while also ensuring a good dispersion state over a long period. On the other hand, as a result of the presently disclosed conductive material paste having a quantitative ratio of the water-soluble polymer relative to the fibrous conductive carbon and a quantitative ratio of the triazine skeleton-containing compound relative to the fibrous conductive carbon that are each not more than a specific value, poor electrical conduction path formation in an electrode mixed material layer due to excessive dispersion of the fibrous conductive carbon is unlikely to arise. It is thought that as a result of the quantitative ratio of the water-soluble polymer relative to the fibrous conductive carbon and the quantitative ratio of the triazine skeleton-containing compound relative to the fibrous conductive carbon each being within a specific range in this manner, an electrode obtained using the presently disclosed conductive material paste can cause an electrochemical device to display excellent cycle characteristics.

### <Fibrous conductive carbon>

The fibrous conductive carbon is not specifically limited so long as it functions as a conductive material that can form electrical conduction paths in an electrode mixed material layer and may, for example, be CNTs, carbon nanohorns, vapor-grown carbon fiber, or milled carbon fiber obtained through pyrolysis and subsequent pulverization of polymer fiber. One of these fibrous conductive carbons may be used individually, or two or more of these fibrous conductive carbons may be used in combination. Of these fibrous conductive carbons, CNTs are preferable from a viewpoint of further improving cycle characteristics of an electrochemical device.

Note that the CNTs may be single-walled carbon nanotubes or may be multi-walled carbon nanotubes. Moreover, a combination of single-walled CNTs and multi-walled CNTs may be used as the CNTs.

### «BET specific surface area»

The BET specific surface area of the fibrous conductive carbon is preferably 10 m²/g or more, more preferably 25 m²/g or more, and even more preferably 40 m²/g or more, and is preferably 400 m²/g or less, more preferably 350 m²/g or less, and even more preferably 300 m²/g or less. When the BET specific surface area of the fibrous conductive carbon is 10 m²/g or more, electrical conduction paths can be formed well in an electrode mixed material layer, and cycle characteristics of an electrochemical device can be further improved. On the other hand, when the BET specific surface area of the fibrous conductive carbon is 400 m²/g or less, dispersion stability of the conductive material paste and peel strength of an electrode can be increased while also further improving viscosity stability of a slurry composition.

### <<Average length>>

The average length of the fibrous conductive carbon is preferably 1.0 µm or more, more preferably 1.5 µm or more, and even more preferably 2.0 µm or more, and is preferably 60 µm or less, more preferably 55 µm or less, and even more preferably 50 µm or less. When the average length of the fibrous conductive carbon is 1.0 µm or more, electrical conduction paths can be formed well in an electrode mixed material layer, and cycle characteristics of an electrochemical device can be further improved. On the other hand, when the average length of the fibrous conductive carbon is 60 µm or less, dispersion stability of the conductive material paste and peel strength of an electrode can be increased while also further improving viscosity stability of a slurry composition.

### <<Aspect ratio>>

The aspect ratio of the fibrous conductive carbon is preferably 50 or more, more preferably 60 or more, and even more preferably 80 or more, and is preferably 1,000 or less, more preferably 900 or less, and even more preferably 800 or less. When the aspect ratio of the fibrous conductive carbon is 50 or more, electrical conduction paths can be formed well in an electrode mixed material layer, and cycle characteristics of an electrochemical device can be further improved. On the other hand, when the aspect ratio of the fibrous conductive carbon is 1,000 or less, dispersion stability of the conductive material paste can be increased while also further improving viscosity stability of a slurry composition.

Any fibrous conductive carbon synthesized by a known fibrous conductive carbon synthesis method such as arc discharge, laser ablation, or chemical vapor deposition (CVD) can be used as the fibrous conductive carbon without any specific limitations.

### <Triazine skeleton-containing compound>

The triazine skeleton-containing compound is not specifically limited so long as it is a compound including one or a plurality of triazine rings (for example, a 1,3,5-triazine ring).

The molecular weight of the triazine skeleton-containing compound is preferably 500 or less, more preferably 400 or less, and even more preferably 300 or less. When the molecular weight of the triazine skeleton-containing compound is 500 or less, dispersion stability of the conductive material paste can be increased while also further improving viscosity stability of a slurry composition, which is presumed to be due to the compound being able to easily approach and adsorb to the surface of the fibrous conductive carbon.

Note that the lower limit for the molecular weight of the triazine skeleton-containing compound is not specifically limited but is preferably 85 or more.

Moreover, from a viewpoint of further improving viscosity stability of a slurry composition, the triazine skeleton-containing compound preferably includes one or more selected from the group consisting of an amino group, a hydroxy group, a cyano group, and a thiol group, more preferably includes one or more selected from the group consisting of an amino group, a hydroxy group, and a cyano group, even more preferably includes either or both of an amino group and a hydroxy group, and particularly preferably includes an amino group.

On the other hand, from a viewpoint of causing even better adsorption of the water-soluble polymer to the surface of the fibrous conductive carbon through the compound and further improving viscosity stability of a slurry composition, the triazine skeleton-containing compound preferably does not include a sulfo group, and more preferably does not include any of a sulfo group, a carboxy group, and a phosphate group (these groups are also referred to collectively as "acidic groups").

More specifically, the triazine skeleton-containing compound may be a compound represented by the following formula (I).

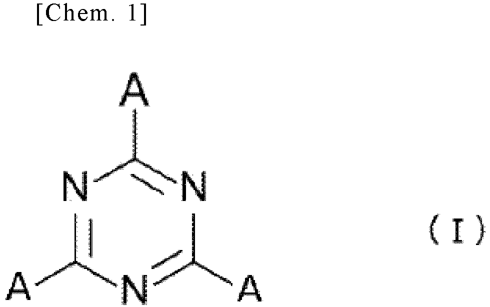

In formula (I), each A represents an amino group, a hydroxy group, a cyano group, a thiol group, a sulfo group, a carboxy group, a phosphate group, or an organic group including at least any one of these groups. Note that the plurality of A groups present in formula (I) are independent of one another and may be the same or different.

From a viewpoint of further improving viscosity stability of a slurry composition, A in formula (I) is preferably an amino group, a hydroxy group, a cyano group, or an organic group including at least any one of these groups, is more preferably an amino group, a hydroxy group, or a cyano group, is even more preferably an amino group or a hydroxy group, and is particularly preferably an amino group.

Moreover, from a viewpoint of increasing dispersion stability of the conductive material paste and peel strength of an electrode while also further improving viscosity stability of a slurry composition, the triazine skeleton-containing compound is preferably 2,4,6-triamino-1,3,5-triazine (hereinafter, also referred to simply as "triaminotriazine") or cyanuric acid, and is more preferably triaminotriazine.

Note that one triazine skeleton-containing compound may be used individually, or two or more triazine skeleton-containing compounds may be used in combination.

The amount of the above-described triazine skeleton-containing compound in the presently disclosed conductive material paste is required to be not less than 1 part by mass and not more than 50 parts by mass per 100 parts by mass of the fibrous conductive carbon, is preferably 2 parts by mass or more, more preferably 3 parts by mass or more, and even more preferably 7.5 parts by mass or more per 100 parts by mass of the fibrous conductive carbon, and is preferably 40 parts by mass or less, and more preferably 30 parts by mass or less per 100 parts by mass of the fibrous conductive carbon. In a situation in which the amount of the triazine skeleton-containing compound is less than 1 part by mass per 100 parts by mass of the fibrous conductive carbon, viscosity stability of a slurry composition cannot be ensured, and dispersion stability of the conductive material paste decreases. On the other hand, in a situation in which the amount of the triazine skeleton-containing compound is more than 50 parts by mass per 100 parts by mass of the fibrous conductive carbon, cycle characteristics of an electrochemical device deteriorate.

The above-described triazine skeleton-containing compound can also function as a foaming agent. In other words, the triazine skeleton-containing compound can foam and release incombustible gas in a situation in which the inside of an electrochemical device reaches a high temperature due to short circuiting between electrodes. This incombustible gas can suppress generation of Joule heat by breaking up electrode structure and severing electrical conduction paths and can also delay the spreading of fire by diluting combustible gas. Accordingly, safety of an electrochemical device can be sufficiently increased when the amount of the triazine skeleton-containing compound in the conductive material paste is 1 part by mass or more per 100 parts by mass of the fibrous conductive carbon.

### <Water-soluble polymer>

The water-soluble polymer is a polymer that can function as a dispersant that is capable of dispersing the previously described fibrous conductive carbon in the dispersion medium including water. Although the following describes water-soluble polymers that can be used herein through an example, the water-soluble polymer that is used is not limited to this example.

### <<Chemical composition>>

The water-soluble polymer preferably includes a carboxy group-containing monomer unit. The inclusion of a carboxy group-containing monomer unit in the water-soluble polymer can facilitate dissolution of the water-soluble polymer in the dispersion medium including water and enables the water-soluble polymer to function well as a dispersant. Note that the water-soluble polymer may include monomer units other than a carboxy group-containing monomer unit (i.e., other monomer units).

### [Carboxy group-containing monomer unit]

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

One of these carboxy group-containing monomers may be used individually, or two or more of these carboxy group-containing monomers may be used in combination. Of these carboxy group-containing monomers, monocarboxylic acids are preferable, and acrylic acid is more preferable.

The proportional content of carboxy group-containing monomer units in the water-soluble polymer when all monomer units of the water-soluble polymer are taken to be 100 mass% is preferably 1 mass% or more, more preferably 2 mass% or more, even more preferably 5 mass% or more, further preferably 10 mass% or more, and particularly preferably 25 mass% or more, and is preferably 50 mass% or less, more preferably 45 mass% or less, even more preferably 40 mass% or less, and particularly preferably 35 mass% or less. When the proportional content of carboxy group-containing monomer units in the water-soluble polymer is 1 mass% or more, dispersion stability of the conductive material paste can be increased while also further improving viscosity stability of a slurry composition. On the other hand, when the proportional content of carboxy group-containing monomer units in the water-soluble polymer is 50 mass% or less, cycle characteristics of an electrochemical device can be further improved.

### [Other monomer units]

Examples of other monomer units include, but are not specifically limited to, a sulfo group-containing monomer unit, a phosphate group-containing monomer unit, a hydroxy group-containing monomer unit, and an amide group-containing monomer unit. Note that the water-soluble polymer may include one type of other monomer unit individually or may include two or more types of other monomer units.

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, 3-allyloxy-2-hydroxypropane sulfonic acid, and salts (sodium salts) thereof. One of these sulfo group-containing monomers may be used individually, or two or more of these sulfo group-containing monomers may be used in combination.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate. One of these phosphate group-containing monomers may be used individually, or two or more of these phosphate group-containing monomers may be used in combination.

Note that in the present disclosure, "(meth)acryloyl" is used to indicate "acryloyl" and/or "methacryloyl".

Examples of hydroxy group-containing monomers that can form a hydroxy group-containing monomer unit include hydroxy group-containing (meth)acrylamide monomers such as N-hydroxymethylacrylamide, N-hydroxyethylacrylamide, N-hydroxypropylacrylamide, N-hydroxymethylmethacrylamide, N-hydroxyethylmethacrylamide, and N-hydroxypropylmethacrylamide; and hydroxy group-containing (meth)acrylate monomers such as 2-hydroxymethyl acrylate, 2-hydroxyethyl acrylate, 2-hydroxypropyl acrylate, 2-hydroxybutyl acrylate, 2-hydroxymethyl methacrylate, 2-hydroxyethyl methacrylate, 2-hydroxypropyl methacrylate, and 2-hydroxybutyl methacrylate. One of these hydroxy group-containing monomers may be used individually, or two or more of these hydroxy group-containing monomers may be used in combination.

Note that in the present disclosure, "(meth)acryl" is used to indicate "acryl" and/or "methacryl", whereas "(meth)acrylate" is used to indicate "acrylate" and/or "methacrylate".

Also note that a monomer unit that includes both an amide group and a hydroxy group is considered to be included among "hydroxy group-containing monomer units" and not be included among "amide group-containing monomer units", and a monomer that includes both an amide group and a hydroxy group is considered to be included among "hydroxy group-containing monomers" and not be included among "amide group-containing monomers" in the present disclosure.

Examples of amide group-containing monomers that can form an amide group-containing monomer unit include N-vinylacetamide, (meth)acrylamide, dimethyl(meth)acrylamide, diethyl(meth)acrylamide, N-methoxymethyl(meth)acrylamide, and dimethylaminopropyl(meth)acrylamide. One of these amide group-containing monomers may be used individually, or two or more of these amide group-containing monomers may be used in combination.

From a viewpoint of further increasing viscosity stability of a slurry composition while also further improving cycle characteristics of an electrochemical device, it is preferable that the water-soluble polymer includes a sulfo group-containing monomer unit as another monomer unit, and more preferable that the water-soluble polymer includes a styrene sulfonic acid unit or a sodium styrenesulfonate unit as another monomer unit.

The proportional content of other monomer units in the water-soluble polymer when all monomer units of the water-soluble polymer are taken to be 100 mass% is preferably 50 mass% or more, more preferably 55 mass% or more, even more preferably 60 mass% or more, and particularly preferably 65 mass% or more, and is preferably 99 mass% or less, more preferably 98 mass% or less, even more preferably 95 mass% or less, and particularly preferably 90 mass% or less. When the proportional content of other monomer units in the water-soluble polymer is 50 mass% or more, cycle characteristics of an electrochemical device can be further improved. On the other hand, when the proportional content of other monomer units in the water-soluble polymer is 99 mass% or less, dispersion stability of the conductive material paste can be increased while also further improving viscosity stability of a slurry composition.

### <<Weight-average molecular weight>>

The weight-average molecular weight of the water-soluble polymer is preferably 100 or more, and more preferably 500 or more, and is preferably 500,000 or less, more preferably 100,000 or less, even more preferably 50,000 or less, and particularly preferably 40,000 or less. When the weight-average molecular weight of the water-soluble polymer is 100 or more, dispersion stability of the conductive material paste and peel strength of an electrode can be increased while also further improving viscosity stability of a slurry composition. On the other hand, when the weight-average molecular weight of the water-soluble polymer is 500,000 or less, dispersion stability of the conductive material paste can be increased while also further improving viscosity stability of a slurry composition.

Note that the "weight-average molecular weight" of a polymer referred to in the present disclosure can be measured by a method described in the EXAMPLES section.

### <<Production method>>

No specific limitations are placed on the method by which the water-soluble polymer is produced. For example, the water-soluble polymer may be produced by performing polymerization in an aqueous solvent with respect to a monomer composition that contains one monomer or two or more monomers. Note that the proportional content of each monomer in the monomer composition can be set in accordance with the desired proportional content of each monomer unit in the polymer.

The polymerization method is not specifically limited and may be solution polymerization, suspension polymerization, bulk polymerization, emulsion polymerization, or the like. Moreover, ionic polymerization, radical polymerization, living radical polymerization, various types of condensation polymerization, addition polymerization, or the like can be adopted as the polymerization reaction. A known emulsifier and/or polymerization initiator can be used in the polymerization as necessary.

### <<Amount>>

The amount of the above-described water-soluble polymer in the presently disclosed conductive material paste is required to be not less than 1 part by mass and not more than 50 parts by mass per 100 parts by mass of the fibrous conductive carbon, is preferably 2 parts by mass or more, more preferably 3 parts by mass or more, and even more preferably 10 parts by mass or more per 100 parts by mass of the fibrous conductive carbon, and is preferably 40 parts by mass or less, and more preferably 30 parts by mass or less per 100 parts by mass of the fibrous conductive carbon. In a situation in which the amount of the water-soluble polymer is less than 1 part by mass per 100 parts by mass of the fibrous conductive carbon, viscosity stability of a slurry composition cannot be ensured, and dispersion stability of the conductive material paste decreases. On the other hand, in a situation in which the amount of the water-soluble polymer is more than 50 parts by mass per 100 parts by mass of the fibrous conductive carbon, peel strength of an electrode and cycle characteristics of an electrochemical device deteriorate.

### <Dispersion medium>

The dispersion medium is not specifically limited so long as it includes water and may be a mixture of water and an organic solvent. Examples of organic solvents that may be used include, but are not specifically limited to, alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide organic solvents such as N,N-dimethylformamide and N-methyl-2-pyrrolidone (NMP); and aromatic hydrocarbons such as toluene, xylene, chlorobenzene, orthodichlorobenzene, and paradichlorobenzene. Note that one organic solvent may be used individually, or two or more organic solvents may be used in combination.

### <Other components>

Examples of other components that can be contained in the conductive material paste include, but are not specifically limited to, conductive materials (carbon black, etc.) other than fibrous conductive carbons and components other than an electrode active material that are subsequently described in the "Slurry composition for electrochemical device electrode" section. Note that one other component may be used individually, or two or more other components may be used in combination.

### (Production method of conductive material paste for electrochemical device electrode)

The presently disclosed conductive material paste set forth above can be produced using the presently disclosed method of producing a conductive material paste. Specifically, the presently disclosed method of producing a conductive material paste involves implementing a step of mixing a fibrous conductive carbon, not less than 1 part by mass and not more than 50 parts by mass of a triazine skeleton-containing compound per 100 parts by mass of the fibrous conductive carbon, not less than 1 part by mass and not more than 50 parts by mass of a water-soluble polymer per 100 parts by mass of the fibrous conductive carbon, water, and other components that are used as necessary.

The aforementioned mixing is preferably performed through a step of producing a premix containing a fibrous conductive carbon, a triazine skeleton-containing compound, and water and a step of adding a water-soluble polymer to the premix. When a fibrous conductive carbon and a triazine skeleton-containing compound are first mixed in the presence of water and then a water-soluble polymer is added to the resultant premix in this manner, dispersion stability of a conductive material paste can be increased while also further improving viscosity stability of a slurry composition, which is presumed to be because the triazine skeleton-containing compound can be caused to adsorb to the surface of the fibrous conductive carbon first, and then the water-soluble polymer can be caused to adsorb well to the surface of the fibrous conductive carbon through the compound.

Note that mixing of the various components can be performed using a known mixing device without any specific limitations. Examples of such mixing devices include a disper blade, a Homo Mixer, a planetary mixer, a kneader, a ball mill, and a bead mill.

### (Slurry composition for electrochemical device electrode)

The presently disclosed slurry composition contains the conductive material paste set forth above and an electrode active material and may contain optional components such as a thickener and a binder as necessary. In other words, the presently disclosed slurry composition contains a fibrous conductive carbon, a triazine skeleton-containing compound, a water-soluble polymer, and a dispersion medium including water and may contain optional components such as a thickener and a binder as necessary.

A slurry composition that contains the conductive material paste set forth above in this manner has excellent viscosity stability and can cause an electrochemical device to display excellent cycle characteristics through an electrode that includes an electrode mixed material layer formed from the slurry composition.

### <Electrode active material>

Known electrode active materials can be used without any specific limitations as the electrode active material (positive electrode active material or negative electrode active material) that is compounded in the slurry for an electrode.

Examples of negative electrode active materials that can be used in a lithium ion secondary battery, for example, include, but are not specifically limited to, a carbon-based negative electrode active material, a metal-based negative electrode active material, and a negative electrode active material that is a combination thereof.

The carbon-based negative electrode active material can be defined as an active material that contains carbon as its main framework and into which lithium can be inserted (also referred to as "doping"). The carbon-based negative electrode active material may be a carbonaceous material or a graphitic material, for example.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

The graphitic material may be natural graphite, artificial graphite, or the like, for example.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal; simple substances of metals that can form a lithium alloy (for example, Ag, Al, Ba, Bi, Cu, Ga, Ge, In, Ni, P, Pb, Sb, Si, Sn, Sr, Zn, and Ti) and alloys thereof; and oxides, sulfides, nitrides, silicides, carbides, and phosphides of any thereof. Of these examples, an active material that contains silicon (silicon-based negative electrode active material) is preferable as a metal-based negative electrode active material. One reason for this is that the capacity of a lithium ion secondary battery can be increased through use of a silicon-based negative electrode active material.

The silicon-based negative electrode active material may be silicon (Si), a silicon-containing alloy, SiO, SiOₓ, a composite of a Si-containing material and a conductive carbon obtained by coating or combining the Si-containing material with the conductive carbon, or the like, for example.

The proportion constituted by the silicon-based negative electrode active material among the negative electrode active material when the overall negative electrode active material is taken to be 100 mass% is preferably 1 mass% or more, and more preferably 3 mass% or more, and is preferably 20 mass% or less, and more preferably 15 mass% or less. The capacity of a lithium ion secondary battery (electrochemical device) can be sufficiently increased when the proportion constituted by the silicon-based negative electrode active material is 1 mass% or more, whereas cycle characteristics can be further improved when the proportion constituted by the silicon-based negative electrode active material is 20 mass% or less.

The particle diameter of the electrode active material is not specifically limited and may be the same as that of a conventionally used electrode active material.

Moreover, the amount of the electrode active material in the slurry composition is not specifically limited and can be set within a conventionally used range.

One electrode active material may be used individually, or two or more electrode active materials may be used in combination.

### <Optional components>

Examples of optional components that can be contained in the slurry composition include thickeners, binders, reinforcing materials, antioxidants, and additives for electrolyte solution having a function of inhibiting electrolyte solution decomposition. One of these optional components may be used individually, or two or more of these optional components may be used in combination.

Of the optional components described above, the slurry composition preferably contains a thickener and a binder.

### <<Thickener>>

Examples of thickeners that may be used include, but are not specifically limited to, carboxymethyl cellulose, methyl cellulose, hydroxypropyl methyl cellulose, hydroxyethyl methyl cellulose, polyvinyl alcohol, polymethacrylic acid, polyacrylic acid, and acrylamide/acrylic acid/N-hydroxyethylacrylamide terpolymer. One of these thickeners may be used individually, or two or more of these thickeners may be used in combination. Moreover, these thickeners can be used in a non-neutralized state or in a neutralized state. Of these thickeners, acrylamide/acrylic acid/N-hydroxyethylacrylamide terpolymer is preferable.

The weight-average molecular weight of the thickener is preferably 500,000 or more, and more preferably 800,000 or more, and is preferably 10,000,000 or less, and more preferably 8,000,000 or less. Peel strength of an electrode can be increased when the weight-average molecular weight of the thickener is 500,000 or more, whereas cycle characteristics of an electrochemical device can be further improved when the weight-average molecular weight of the thickener is 10,000,000 or less.

The amount of the above-described thickener in the presently disclosed slurry composition is preferably 0.2 parts by mass or more, and more preferably 0.4 parts by mass or more per 100 parts by mass of the electrode active material, and is preferably 5.0 parts by mass or less, and more preferably 4.0 parts by mass or less per 100 parts by mass of the electrode active material. Cycle characteristics of an electrochemical device can be further enhanced when the amount of the thickener is 0.2 parts by mass or more per 100 parts by mass of the electrode active material, whereas the capacity of an electrochemical device can be improved when the amount of the thickener is 5.0 parts by mass or less per 100 parts by mass of the electrode active material.

### <<Binder>>

The binder is not specifically limited but is preferably a water-insoluble (i.e., not water-soluble) polymer, for example. The water-insoluble polymer may be polyacrylonitrile (PAN), styrene-butadiene copolymer (SBR), or a fluorine-containing resin such as polyvinylidene fluoride (PVDF), for example. One of these binders may be used individually, or two or more of these binders may be used in combination.

The amount of the above-described binder in the presently disclosed slurry composition is preferably not less than 0.1 parts by mass and not more than 2.0 parts by mass per 100 parts by mass of the electrode active material. When the amount of the binder per 100 parts by mass of the electrode active material is within the range set forth above, peel strength of an electrode can be increased while also further improving cycle characteristics of an electrochemical device.

### <Production method of slurry composition>

A known mixing device such as previously described in the "Production method of conductive material paste for electrochemical device electrode" section, for example, can be used without any specific limitations in the mixing method when the above-described components are mixed to obtain the slurry composition.

Note that the mixing ratio of the electrode active material and the conductive material paste may be set as appropriate in accordance with the desired compounding ratio of the electrode active material and the fibrous conductive carbon. The amount of the fibrous conductive carbon in the slurry composition is preferably 0.001 parts by mass or more, and more preferably 0.005 parts by mass or more per 100 parts by mass of the electrode active material, and is preferably 1.0 parts by mass or less, and more preferably 0.8 parts by mass or less per 100 parts by mass of the electrode active material. Cycle characteristics of an electrochemical device can be further enhanced when the amount of the fibrous conductive carbon is 0.005 parts by mass or more per 100 parts by mass of the electrode active material, whereas the capacity of an electrochemical device can be improved when the amount of the fibrous conductive carbon is 1.0 parts by mass or less per 100 parts by mass of the electrode active material.

### (Electrode for electrochemical device)

The presently disclosed electrode includes an electrode mixed material layer obtained using the presently disclosed slurry composition set forth above. More specifically, the presently disclosed electrode normally includes an electrode mixed material layer on a current collector, wherein the electrode mixed material layer is formed of a dried product of the presently disclosed slurry composition. Consequently, the electrode mixed material layer contains an electrode active material, a fibrous conductive carbon, and a triazine skeleton-containing compound and may contain optional components such as a thickener and a binder as necessary. Note that the preferred ratio of each component in the electrode mixed material layer is the same as the preferred ratio of each component in the slurry composition.

The presently disclosed electrode can cause an electrochemical device to display excellent cycle characteristics as a result of including an electrode mixed material layer that is formed using the presently disclosed slurry composition set forth above.

### <Current collector>

The current collector is formed of a material having electrical conductivity and electrochemical durability. For example, the current collector can be formed of iron, copper, aluminum, nickel, stainless steel, titanium, tantalum, gold, platinum, or the like. One of these materials may be used individually, or two or more of these materials may be used in combination. A current collector formed of aluminum (aluminum foil, etc.) is preferable as a current collector of a positive electrode, whereas a current collector formed of copper (copper foil, etc.) is preferable as a current collector of a negative electrode.

### <Production method of electrode>

No specific limitations are placed on the method by which the presently disclosed electrode is produced. For example, the presently disclosed electrode can be produced by applying the presently disclosed slurry composition set forth above onto at least one side of the current collector and then drying the slurry composition to form an electrode mixed material layer. In more detail, this production method includes a step of applying the slurry composition onto at least one side of the current collector (application step) and a step of drying the slurry composition that has been applied onto at least one side of the current collector so as to form an electrode mixed material layer on the current collector (drying step).

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

### <<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as mold pressing or roll pressing. This pressing process can improve peel strength of the electrode.

### (Electrochemical device)

The presently disclosed electrochemical device includes the presently disclosed electrode set forth above. The presently disclosed electrochemical device has excellent cycle characteristics as a result of including the presently disclosed electrode. Note that the presently disclosed electrochemical device may be a non-aqueous secondary battery, for example, and is preferably a lithium ion secondary battery.

The following describes the configuration of a lithium ion secondary battery as one example of the presently disclosed electrochemical device. This lithium ion secondary battery includes a positive electrode, a negative electrode, an electrolyte solution, and a separator. At least one of the positive electrode and the negative electrode is the presently disclosed electrode. In other words, this lithium ion secondary battery may be a lithium ion secondary battery in which the positive electrode is the presently disclosed electrode and the negative electrode is an electrode other than the presently disclosed electrode, may be a lithium ion secondary battery in which the positive electrode is an electrode other than the presently disclosed electrode and the negative electrode is the presently disclosed electrode, or may be a lithium ion secondary battery in which both the positive electrode and the negative electrode are the presently disclosed electrode.

### <Electrode other than presently disclosed electrode>

Any known electrode can be used without any specific limitations as an electrode that does not correspond to the presently disclosed electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate. For example, the concentration of the electrolyte is preferably set as 0.5 mass% to 15 mass%, is more preferably set as 2 mass% to 13 mass%, and is even more preferably set as 5 mass% to 10 mass%. Known additives such as fluoroethylene carbonate and ethyl methyl sulfone may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

### <Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the lithium ion secondary battery may be a coin type, a button type, a sheet type, a cylinder type, a prismatic type, a flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the weight-average molecular weight of a water-soluble polymer and a thickener, the dispersion stability of a conductive material paste, the viscosity stability of a slurry composition, the peel strength of a negative electrode, and the cycle characteristics and inhibition of heat generation in the event of an internal short circuit of a lithium ion secondary battery.

### <Weight-average molecular weight>

A water-soluble polymer and a thickener were each taken to be a measurement subject polymer, and the weight-average molecular weights of these polymers were measured by gel permeation chromatography (GPC) according to the following procedure. First, the measurement subject polymer was added to approximately 5 mL of an eluent such that the solid content concentration thereof was approximately 0.5 g/L and was slowly dissolved at room temperature. Once dissolution of the polymer was visually confirmed, the solution was gently filtered using a 0.45 µm filter to produce a measurement sample. The weight-average molecular weight was calculated as a standard substance-equivalent value by using a standard substance to prepare a calibration curve. Note that the measurement conditions were as follows.

### <<Measurement conditions>>

Column: Produced by Showa Denko K.K.; product name: Shodex OHpak (SB-G, SB-807HQ, SB-806MHQ)
Eluent: 0.1 M Tris buffer solution (0.1 M potassium chloride added) Flow rate: 0.5 mL/min
Sample concentration: 0.05 g/L (solid content concentration) Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

### <Dispersion stability>

The viscosity η1 of a conductive material paste straight after production was measured using a B-type viscometer with conditions of a temperature of 25°C and a spindle rotation speed of 60 rpm at a time 60 seconds after the start of rotation of the spindle. The conductive material paste that had undergone measurement of η1 was then stored at rest in a 25°C environment for 1 week, and then the viscosity η2 after storage was measured in the same manner as the viscosity η 1. A ratio of η2 relative to η1 (η2/η1) was taken to be a paste viscosity ratio and was evaluated by the following standard. A value of closer to 1.0 for the paste viscosity ratio indicates that viscosity increase of a conductive material paste is inhibited.
A: Paste viscosity ratio of less than 1.1
B: Paste viscosity ratio of not less than 1.1 and less than 1.5
C: Paste viscosity ratio of not less than 1.5 and less than 2.0
D: Paste viscosity ratio of 2.0 or more

### <Viscosity stability>

The viscosity η3 of a slurry composition straight after production was measured using a B-type viscometer with conditions of a temperature of 25°C and a spindle rotation speed of 60 rpm at a time 60 seconds after the start of rotation of the spindle. The slurry composition that had undergone measurement of η3 was then stored at rest in a 25°C environment for 1 week, and then the viscosity η4 after storage was measured in the same manner as the viscosity η3. A ratio of η4 relative to η3 (η4/η3) was taken to be a slurry viscosity ratio and was evaluated by the following standard. A value of closer to 1.0 for the slurry viscosity ratio indicates that viscosity increase of a slurry composition is inhibited.
A: Slurry viscosity ratio of less than 1.1
B: Slurry viscosity ratio of not less than 1.1 and less than 1.3
C: Slurry viscosity ratio of not less than 1.3 and less than 1.5
D: Slurry viscosity ratio of 1.5 or more

### <Peel strength>

A negative electrode was cut out as a rectangle of 1 cm in width by 10 cm in length to obtain a test specimen. The obtained test specimen was fixed in place with the surface of the negative electrode mixed material layer facing upward. Cellophane tape (tape prescribed by JIS Z1522) was affixed to the surface of the negative electrode mixed material layer of the test specimen that had been fixed in place. The cellophane tape was subsequently peeled in a direction at 180° from one end of the test specimen at a speed of 50 mm/min, and the stress during this peeling was measured. Five measurements in total were made in this manner, and an average value of the measurements was taken to be the peel strength and was evaluated by the following standard.
A: Peel strength of 10 N/m or more
B: Peel strength of not less than 8 N/m and less than 10 N/m
C: Peel strength of not less than 4 N/m and less than 8 N/m
D: Peel strength of less than 4 N/m

### <Cycle characteristics>

A lithium ion secondary battery was left at rest in a 25°C environment for 24 hours after injection of electrolyte solution. Next, the lithium ion secondary battery was subjected to a charge/discharge operation of charging to a cell voltage of 4.35 V and discharging to a cell voltage of 2.75 V by a 0.1C constant-current method, and the initial capacity C0 was measured. In addition, the lithium ion secondary battery was subjected to repeated charging and discharging through charging to a cell voltage of 4.35 V by a 1.0C constant-current method and discharging to a cell voltage of 2.75 V by the same constant-current method as in the charging mode in a 45°C environment, and the capacity C1 after 100 cycles was measured. A capacity maintenance rate (%) was calculated (= C1/C0 × 100) and was evaluated by the following standard. A higher capacity maintenance rate indicates that a lithium ion secondary battery has better cycle characteristics.
A: Capacity maintenance rate of 96% or more
B: Capacity maintenance rate of not less than 90% and less than 96%
C: Capacity maintenance rate of not less than 80% and less than 90%
D: Capacity maintenance rate of less than 80%

### <Inhibition of heat generation in event of internal short circuit>

A lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was CC-CV charged (upper limit cell voltage: 4.35 V) by a 0.2C constant-current method and CC discharged to 3.00 V by a 0.2C constant-current method. This charging and discharging at 0.2C was repeated three times. The lithium ion secondary battery was subsequently charged to 4.35 V (cut-off condition: 0.02C) by a constant-voltage constant-current (CC-CV) method at a charge rate of 0.2C in a 25°C atmosphere. Thereafter, an iron nail of 3 mm in diameter and 10 cm in length was caused to pierce the lithium ion secondary battery at an approximately central location at a speed of 5 m/min so as to cause a forced short circuit. A forced short circuit was performed for each of 5 lithium ion secondary batteries (test subjects) prepared by the same operations, and an evaluation was made by the following standard based on the number of test subjects in which rupturing and ignition did not occur. A larger number of test subjects in which rupturing and ignition do not occur indicates that a lithium ion secondary battery has better inhibition of heat generation in the event of an internal short circuit.
A: Number of test subjects in which rupturing and ignition do not occur is 4 or 5
B: Number of test subjects in which rupturing and ignition do not occur is 3
C: Number of test subjects in which rupturing and ignition do not occur is 2
D: Number of test subjects in which rupturing and ignition do not occur is 1 or 0

### (Example 1)

### <Production of water-soluble polymer>

A 1.5 L glass flask equipped with an agitator was charged with 900 parts of deionized water, was heated to a temperature of 40°C, and the inside of the flask was purged with nitrogen gas at a flow rate of 100 mL/min. Next, 75 parts of sodium styrenesulfonate as a sulfo group-containing monomer, 25 parts of acrylic acid as a carboxy group-containing monomer, and 2.5 parts of thioglycerol were mixed and were then injected into the flask. Thereafter, a sintered metal was used to perform 60 minutes of nitrogen bubbling at a flow rate of 1.5 L/min to cause degassing, and then 10 parts of a 5.0% aqueous solution of ascorbic acid as a polymerization accelerator was added using a syringe. Once 5 minutes had passed from addition of the polymerization accelerator, 10 parts of a 10% aqueous solution of ammonium persulfate as a polymerization initiator was added into the flask using a syringe so as to initiate a polymerization reaction. Once 2 hours had passed from addition of the polymerization initiator, the temperature was raised to 60°C and was held thereat for 2 hours to cause progression of the polymerization reaction. Once 4 hours had passed from addition of the polymerization initiator, the flask was opened to air, the polymerization reaction was stopped, and the pH was adjusted to 8.0 through addition of an 8% aqueous solution of lithium hydroxide while maintaining a temperature of 25°C to yield an aqueous solution of a water-soluble polymer.

### <Production of binder>

A 5 MPa pressure-resistant vessel A equipped with a stirrer was charged with 3.15 parts of styrene, 1.66 parts of 1,3-butadiene, 0.2 parts of sodium lauryl sulfate as an emulsifier, 20 parts of deionized water, and 0.03 parts of potassium persulfate as a polymerization initiator. These materials were thoroughly stirred, were subsequently heated to 60°C to initiate polymerization, and were reacted for 6 hours to obtain seed particles.

After this reaction, the temperature was raised to 75°C, addition of a mixture of 56.85 parts of styrene, 33.84 parts of 1,3-butadiene, 3.5 parts of itaconic acid, 0.25 parts of tert-dodecyl mercaptan as a chain transfer agent, and 0.35 parts of sodium lauryl sulfate as an emulsifier that was loaded into a separate vessel B was initiated from the vessel B to the pressure-resistant vessel A, and, simultaneously thereto, addition of 1 part of potassium persulfate as a polymerization initiator to the pressure-resistant vessel A was initiated so as to initiate a second stage of polymerization.

Once 4 hours had passed from the start of the second stage of polymerization (once 70% of the overall monomer composition had been added), 1 part of 2-hydroxyethyl acrylate was added into the pressure-resistant vessel A over 1.5 hours.

In other words, 60 parts of styrene, 35.5 parts of 1,3-butadiene, 3.5 parts of itaconic acid, and 1 part of 2-hydroxyethyl acrylate were used as the overall monomer composition.

Addition of the total amount of a mixture containing this monomer composition was complete once 5.5 hours had passed from the start of the second stage of polymerization. The temperature was subsequently raised to 85°C, and a reaction was performed for 6 hours. Cooling was performed to quench the reaction at the point at which the polymerization conversion rate reached 97%. A mixture containing this polymerized product was adjusted to pH 8 through addition of 5% sodium hydroxide aqueous solution. Unreacted monomer was subsequently removed through thermal-vacuum distillation. Cooling was subsequently performed to yield a water dispersion of a particulate binder (water-insoluble, SBR).

### <Production of thickener>

A 10 L flask equipped with a septum was charged with 770 parts of deionized water, was heated to a temperature of 40°C, and the inside of the flask was purged with nitrogen gas at a flow rate of 100 mL/min. A mixture obtained by mixing 35 parts of acrylic acid, 40 parts of acrylamide, and 25 parts of N-hydroxyethylacrylamide was injected into the flask using a syringe. Thereafter, 9.3 parts of a 2.0% aqueous solution of sodium L-ascorbate as a polymerization accelerator was added using a syringe, and, 10 minutes later, 7.5 parts of a 2.5% aqueous solution of ammonium persulfate as a polymerization initiator was added into the flask using a syringe. Once 1 hour had passed from the start of the reaction, the temperature was raised to 55°C to cause the polymerization reaction to progress. After 4 hours, 1.2 parts of a 2.0% aqueous solution of sodium L-ascorbate as a polymerization accelerator was added using a syringe, and, 10 minutes later, 1.25 parts of a 2.5% aqueous solution of potassium persulfate as a polymerization initiator was added into the flask using a syringe. After 6 hours, a reaction inhibitor was added, the flask was opened to air, and the polymerization reaction was stopped. The reaction product was subsequently adjusted to pH 8 using a 10% aqueous solution of lithium hydroxide to yield a thickener (acrylic acid/acrylamide/N-hydroxyethylacrylamide terpolymer).

### <Production of conductive material paste>

A disper blade was used to stir (3,000 rpm, 60 minutes) 100 parts of multi-walled CNTs (BET specific surface area: 200 m²/g; average length: 30 µm; aspect ratio: 300) as a fibrous conductive carbon, 7.5 parts of triaminotriazine as a triazine skeleton-containing compound, and an appropriate amount of deionized water as a dispersion medium, and then a bead mill in which zirconia beads of 1 mm in diameter were used was used to perform 30 minutes of mixing at a circumferential speed of 8 m/s. The resultant premix was then subjected to addition of 10 parts (in terms of solid content) of the aqueous solution of the water-soluble polymer obtained as described above and a further 30 minutes of mixing to produce a conductive material paste (solid content concentration: 6.0%). Dispersion stability was evaluated for this conductive material paste. The result is shown in Table 1.

### <Production of slurry composition for negative electrode>

A planetary mixer equipped with a disper blade was charged with 90 parts of artificial graphite (volume-average particle diameter: 24.5 µm; specific surface area: 3.5 m²/g) as a carbon-based negative electrode active material, 10 parts of SiOₓ as a silicon-based negative electrode active material, and 2.0 parts (in terms of solid content) of the aqueous solution of the thickener obtained as described above. These materials were adjusted to a solid content concentration of 58% with deionized water and were mixed at room temperature for 60 minutes. After this mixing, the conductive material paste obtained as described above was added into the planetary mixer and mixed such that the multi-walled carbon nanotubes were 0.2 parts (in terms of solid content). Next, the solid content concentration was adjusted to 50% with deionized water, and 1.0 parts (in terms of solid content) of the water dispersion of the binder obtained as described above was further added to yield a mixture. The obtained mixture was subjected to defoaming under reduced pressure to yield a slurry composition for a negative electrode having good fluidity. Viscosity stability was evaluated for this slurry composition for a negative electrode. The result is shown in Table 1.

### <Production of negative electrode>

The slurry composition for a negative electrode obtained as described above was applied onto copper foil (current collector) of 18 µm in thickness by a comma coater such as to have a thickness of 105 µm after drying and a coating weight of 10 mg/cm². The copper foil with the slurry composition for a negative electrode applied thereon was conveyed inside an oven having a temperature of 75°C for 2 minutes and an oven having a temperature of 120°C for 2 minutes at a speed of 0.5 m/min so as to dry the slurry composition for a negative electrode on the copper foil and obtain a negative electrode web. The negative electrode web was rolled by roll pressing to obtain a negative electrode having a negative electrode mixed material layer thickness of 80 µm. Peel strength was evaluated for this negative electrode. The result is shown in Table 1.

### <Production of positive electrode>

A slurry composition for a positive electrode was obtained by adding 95 parts of LiCoO₂ having a spinel structure as a positive electrode active material, 3 parts in terms of solid content of PVDF (polyvinylidene fluoride) as a binder for a positive electrode, 2 parts of acetylene black as a conductive material, and 20 parts of N-methylpyrrolidone as a solvent into a planetary mixer and mixing these materials.

The obtained slurry composition for a positive electrode was applied onto aluminum foil (current collector) of 20 µm in thickness by a comma coater such as to have a thickness after drying of approximately 100 µm. The aluminum foil with the slurry composition for a positive electrode applied thereon was conveyed inside an oven having a temperature of 60°C for 2 minutes and an oven having a temperature of 120°C for 2 minutes at a speed of 0.5 m/min so as to dry the slurry composition for a positive electrode on the aluminum foil and obtain a positive electrode web. The positive electrode web was rolled by roll pressing to obtain a positive electrode having a positive electrode mixed material layer thickness of 70 µm.

### <Preparation of separator>

A separator made of a single layer of polypropylene (width 65 mm, length 500 mm, thickness 25 µm; produced by dry method; porosity 55%) was prepared. This separator was cut out as a 5 cm × 5 cm square and was then used in production of a lithium ion secondary battery described below.

### <Production of secondary battery>

An aluminum packing case was prepared as a battery case. The positive electrode was cut out as a 4 cm × 4 cm square and was arranged such that the surface at the current collector-side thereof was in contact with the aluminum packing case. Next, the above-described square separator was arranged on the surface of the positive electrode mixed material layer of the positive electrode. In addition, the negative electrode was cut out as a 4.2 cm × 4.2 cm square and was arranged on the separator such that the surface at the negative electrode mixed material layer-side thereof faced toward the separator. Thereafter, a LiPF₆ solution of 1.0 M in concentration (solvent: mixed solvent of ethylene carbonate/diethyl carbonate = 1/2 (volume ratio); additives: 2 volume% (solvent ratio) of each of fluoroethylene carbonate and vinylene carbonate) was loaded as an electrolyte solution. The aluminum packing case was then closed by heat sealing at 150°C to hermetically seal an opening of the aluminum packing and thereby produce a laminate cell-type lithium ion secondary battery. Cycle characteristics and inhibition of heat generation in the event of an internal short circuit were evaluated for this lithium ion secondary battery. The results are shown in Table 1.

### (Examples 2 and 3)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of triaminotriazine was changed to 1 part (Example 2) or 50 parts (Example 3) in production of the conductive material paste. The results are shown in Table 1.

### (Examples 4 and 5)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of the water-soluble polymer was changed to 1 part (Example 4) or 50 parts (Example 5) in production of the conductive material paste. The results are shown in Table 1.

### (Example 6)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that single-walled CNTs (BET specific surface area: 200 m²/g; average length: 30 µm; aspect ratio: 300) were used instead of multi-walled CNTs in production of the conductive material paste. The results are shown in Table 1.

### (Examples 7 to 12)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that multi-walled CNTs having the following properties were used in production of the conductive material paste. The results are shown in Tables 1 and 2.
Example 7: BET specific surface area 10 m²/g, average length 30 µm, aspect ratio 300
Example 8: BET specific surface area 400 m²/g, average length 30 µm, aspect ratio 300
Example 9: BET specific surface area 200 m²/g, average length 1 µm, aspect ratio 300
Example 10: BET specific surface area 200 m²/g, average length 60 µm, aspect ratio 300
Example 11: BET specific surface area 200 m²/g, average length 30 µm, aspect ratio 50
Example 12: BET specific surface area 200 m²/g, average length 30 µm, aspect ratio 1,000

### (Example 13)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of sodium styrenesulfonate was changed to 99 parts and the amount of acrylic acid was changed to 1 part in production of the water-soluble polymer. The results are shown in Table 2.

### (Example 14)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of sodium styrenesulfonate was changed to 50 parts and the amount of acrylic acid was changed to 50 parts in production of the water-soluble polymer. The results are shown in Table 2.

### (Example 15)

A water-soluble polymer, a binder, a thickener, a slurry composition for a negative electrode, a negative electrode, a positive electrode, a separator, and a lithium ion secondary battery were prepared and various evaluations were performed in the same way as in Example 1 with the exception that a conductive material paste produced as described below was used. The results are shown in Table 2.

### <Production of conductive material paste>

A disper blade was used to stir (3,000 rpm, 60 minutes) 100 parts of multi-walled CNTs (BET specific surface area: 200 m²/g; average length: 30 µm; aspect ratio: 300) as a fibrous conductive carbon, 7.5 parts of triaminotriazine as a triazine skeleton-containing compound, 10 parts (in terms of solid content) of an aqueous solution of a water-soluble polymer obtained in the same way as in Example 1, and an appropriate amount of deionized water as a dispersion medium. Next, a bead mill in which zirconia beads of 1 mm in diameter were used was used to perform 30 minutes of mixing at a circumferential speed of 8 m/s to produce a conductive material paste (solid content concentration: 6.0%).

### (Example 16)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of acrylic acid was changed to 20 parts and 80 parts of acrylamide was used instead of 75 parts of sodium styrenesulfonate in production of the water-soluble polymer. The results are shown in Table 2.

### (Example 17)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of acrylic acid was changed to 20 parts and 80 parts of N-hydroxyethylacrylamide was used instead of 75 parts of sodium styrenesulfonate in production of the water-soluble polymer. The results are shown in Table 2.

### (Example 18)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that cyanuric acid was used instead of triaminotriazine in production of the conductive material paste. The results are shown in Table 3.

### (Example 19)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that a compound of the following formula (II) (compound (II)) was used instead of triaminotriazine in production of the conductive material paste. The results are shown in Table 3.

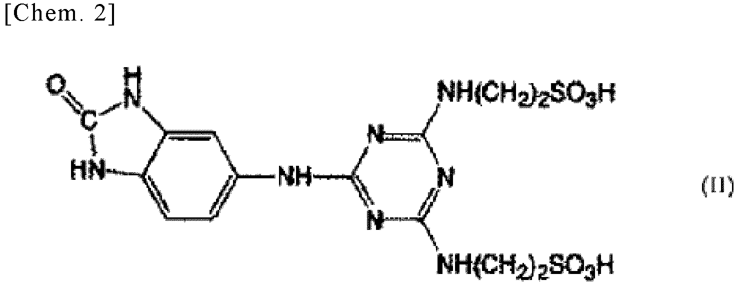

### (Comparative Examples 1 and 2)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of triaminotriazine was changed to 0.1 parts (Comparative Example 1) or 70 parts (Comparative Example 2) in production of the conductive material paste. The results are shown in Table 3.

### (Comparative Examples 3 and 4)

A water-soluble polymer, a binder, a thickener, a conductive material paste, a slurry composition for a negative electrode, a negative electrode, a positive electrode, a separator, and a lithium ion secondary battery were prepared and various evaluations were performed in the same way as in Example 1 with the exception that the amount of the water-soluble polymer was changed to 0.1 parts (Comparative Example 3) or 70 parts (Comparative Example 4) in production of the conductive material paste. The results are shown in Table 3.

### (Comparative Example 5)

A binder, a thickener, a conductive material paste, a slurry composition for a negative electrode, a negative electrode, a positive electrode, a separator, and a lithium ion secondary battery were prepared and various evaluations were performed in the same way as in Example 19 with the exception that a water-soluble polymer was not used in production of the conductive material paste. The results are shown in Table 3.

### (Comparative Example 6)

A binder, a thickener, a slurry composition for a negative electrode, a negative electrode, a positive electrode, a separator, and a lithium ion secondary battery were prepared and various evaluations were performed in the same way as in Example 1 with the exception that a conductive material paste produced as described below was used. The results are shown in Table 3.

### <Production of conductive material paste>

A disper blade was used to stir (3,000 rpm, 60 minutes) 100 parts of multi-walled CNTs (BET specific surface area: 200 m²/g; average length: 30 µm; aspect ratio: 300) as a fibrous conductive carbon, 25 parts of a compound of the following formula (III) (compound (III)), and an appropriate amount of deionized water as a dispersion medium. Next, a bead mill in which zirconia beads of 1 mm in diameter were used was used to perform 30 minutes of mixing at a circumferential speed of 8 m/s to produce a conductive material paste (solid content concentration: 6.0%).

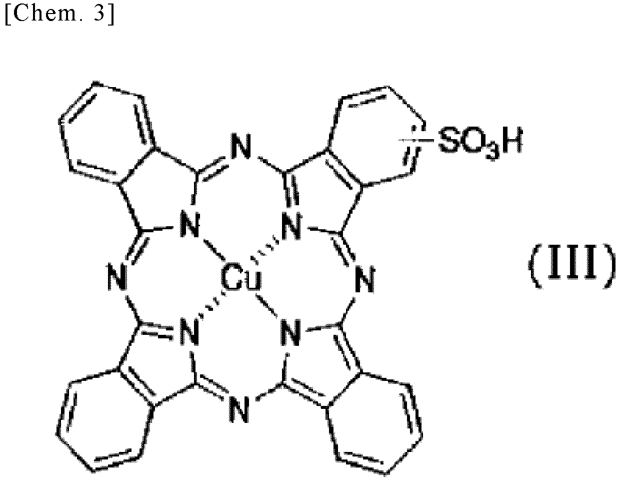

In Tables 1 to 3, shown below:
"Carbon" indicates fibrous conductive carbon;
"Triazine compound" indicates triazine skeleton-containing compound;
"MWCNT" indicates multi-walled carbon nanotubes;
"SWCNT" indicates single-walled carbon nanotubes;
"AA" indicates acrylic acid unit;
"SS" indicates sodium styrenesulfonate unit;
"AAm" indicates acrylamide unit;
"HEAAm" indicates N-hydroxyethylacrylamide unit;
"X" indicates production method of conductive material paste involving prior addition of triazine skeleton-containing compound and subsequent addition of water-soluble polymer; and
"Y" indicates production method of conductive material paste involving simultaneous addition of triazine skeleton-containing compound and water-soluble polymer.

**[Table 1]**

| | | | | Example 1 | Example 2 | Example 3 | Example 4 | Example 5 | Example 6 | Example 7 | Example 8 |
|---|---|---|---|---|---|---|---|---|---|---|---|
| Conductive material paste | Carbon | Type | | MWCNT | MWCNT | MWCNT | MWCNT | MWCNT | SWCNT | MWCNT | MWCNT |
| | | Amount [parts by mass] | | 100 | 100 | 100 | 100 | 100 | 100 | 100 | 100 |
| | | BET specific surface area [m²/s] | | 200 | 200 | 200 | 200 | 200 | 200 | 10 | 400 |
| | | Average length [µm] | | 30 | 30 | 30 | 30 | 30 | 30 | 30 | 30 |
| | | Aspect ratio [-] | | 300 | 300 | 300 | 300 | 300 | 300 | 300 | 300 |
| | Triazine compound | Type | | Triamino triazine | Triamino triazine | Triamino triazine | Triamino triazine | Triamino triazine | Triamino triazine | Triamino triazine | Triamino triazine |
| | | Amount [parts by mass] | | 7.5 | 1 | 50 | 7.5 | 7.5 | 7.5 | 7.5 | 7.5 |
| | | Molecular weight [-] | | 126.12 | 126.12 | 126.12 | 126.12 | 126.12 | 126.12 | 126.12 | 126.12 |
| | | Functional group | | Amino | Amino | Amino | Amino | Amino | Amino | Amino | Amino |
| | Water soluble polymer, etc. | Chemical composition | AA [mass%] | 25 | 25 | 25 | 25 | 25 | 25 | 25 | 25 |
| | | | SS [mass%] | 75 | 75 | 75 | 75 | 75 | 75 | 75 | 75 |
| | | | AAm [mass%] | - | - | - | - | - | - | - | - |
| | | | HEAAm [mass%] | - | - | - | - | - | - | - | - |
| | | Amount [parts by mass] | | 10 | 10 | 10 | 1 | 50 | 10 | 10 | 10 |
| | | Mw [-] | | 25,900 | 25,900 | 25,900 | 25,900 | 25,900 | 25,900 | 25,900 | 25,900 |
| | Dispersion medium | Type | | Water | Water | Water | Water | Water | Water | Water | Water |
| | Production method | | | X | X | X | X | X | X | X | X |
| Dispersion stability (paste) | | | | A | A | A | A | A | A | A | A |
| Viscosity stability (slurry) | | | | A | B | A | B | A | A | A | B |
| Peel strength | | | | A | A | A | A | B | A | A | B |
| Cycle characteristics | | | | A | A | B | A | B | A | B | A |
| Inhibition of heat generation | | | | A | B | A | A | A | A | A | A |

**[Table 2]**

| | | | | Example 9 | Example 10 | Example 11 | Example 12 | Example 13 | Example 14 | Example 15 | Example 16 | Example 17 |
|---|---|---|---|---|---|---|---|---|---|---|---|---|
| Conductive material paste | Carbon | Type | | MWCNT | MWCNT | MWCNT | MWCNT | MWCNT | MWCNT | MWCNT | MWCNT | MWCNT |
| | | Amount [parts by mass] | | 100 | 100 | 100 | 100 | 100 | 100 | 100 | 100 | 100 |
| | | BET specific surface area [m²/s] | | 200 | 200 | 200 | 200 | 200 | 200 | 200 | 200 | 200 |
| | | Average length [µm] | | 1 | 60 | 30 | 30 | 30 | 30 | 30 | 30 | 30 |
| | | Aspect ratio [-] | | 300 | 300 | 50 | 1000 | 300 | 300 | 300 | 300 | 300 |
| | Triazine compound | Type | | Triamino triazine | Triamino triazine | Triamino triazine | Triamino triazine | Triamino triazine | Triamino triazine | Triamino triazine | Triamino triazine | Triamino triazine |
| | | Amount [parts by mass] | | 7.5 | 7.5 | 7.5 | 7.5 | 7.5 | 7.5 | 7.5 | 7.5 | 7.5 |
| | | Molecular weight [-] | | 126.12 | 126.12 | 126.12 | 126.12 | 126.12 | 126.12 | 126.12 | 126.12 | 126.12 |
| | | Functional group | | Amino | Amino | Amino | Amino | Amino | Amino | Amino | Amino | Amino |
| | Water soluble polymer, etc. | Chemical composition | AA [mass%] | 25 | 25 | 25 | 25 | 1 | 50 | 25 | 20 | 20 |
| | | | SS [mass%] | 75 | 75 | 75 | 75 | 99 | 50 | 75 | - | - |
| | | | AAm [mass%] | - | - | - | - | - | - | - | 80 | - |
| | | | HEAAm [mass%] | - | - | - | - | - | - | - | - | 80 |
| | | Amount [parts by mass] | | 10 | 10 | 10 | 10 | 10 | 10 | 10 | 10 | 10 |
| | | Mw [-] | | 25,900 | 25,900 | 25,900 | 25,900 | 16,500 | 31,200 | 25,900 | 34,300 | 31,600 |
| | Dispersion medium | Type | | Water | Water | Water | Water | Water | Water | Water | Water | Water |
| | Production method | | | X | X | X | X | X | X | Y | X | X |
| Dispersion stability (paste) | | | | A | A | A | A | A | A | A | A | A |
| Viscosity stability (slurty) | | | | A | B | A | B | B | A | B | B | B |
| Peel strength | | | | A | B | A | A | A | A | A | A | A |
| Cycle characteristics | | | | B | A | B | A | A | B | A | A | A |
| Inhibition of heat generation | | | | A | A | A | A | A | A | A | A | A |

**[Table 3]**

| | | | | Example 18 | Example 19 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Conductive material paste | Carbon | Type | | MWCNT | MWCNT | MWCNT | MWCNT | MWCNT | MWCNT | MWCNT | MWCNT |
| | | Amount [parts by mass] | | 100 | 100 | 100 | 100 | 100 | 100 | 100 | 100 |
| | | BET specific surface area [m²/s] | | 200 | 200 | 200 | 200 | 200 | 200 | 200 | 200 |
| | | Average length [µm] | | 30 | 30 | 30 | 30 | 30 | 30 | 30 | 30 |
| | | Aspect ratio [-] | | 300 | 300 | 300 | 300 | 300 | 300 | 300 | 300 |
| | Triazine compound | Type | | Cyanuric acid | Compound (II) | Triamino triazine | Triamino triazine | Triamino triazine | Triamino triazine | Compound (II) | - |
| | | Amount [parts by mass] | | 7.5 | 7.5 | 0.1 | 70 | 7.5 | 7.5 | 25 | - |
| | | Molecular weight [-] | | 129.07 | 474 | 126.12 | 126.12 | 126.12 | 126.12 | 474 | - |
| | | Functional group | | Hydroxy | Amino Sulfo | Amino | Amino | Amino | Amino | Amino Sulfo | - |
| | Water soluble polymer, etc. | Chemical composition | AA [mass%] | 25 | 25 | 25 | 25 | 25 | 25 | - | Compound (III) |
| | | | SS [mass%] | 75 | 75 | 75 | 75 | 75 | 75 | - | |
| | | | AAm [mass%] | - | - | - | - | - | - | - | |
| | | | HEAAm [mass%] | - | - | - | - | - | - | - | |
| | | Amount [parts by mass] | | 10 | 10 | 10 | 10 | 0.1 | 70 | - | 25 |
| | | Mw [-] | | 25,900 | 25,900 | 25,900 | 25,900 | 25,900 | 25,900 | - | 594 |
| | Dispersion medium | Type | | Water | Water | Water | Water | Water | Water | Water | Water |
| | Production method | | | X | X | X | X | X | X | - | - |
| Dispersion stability (paste) | | | | A | B | C | B | C | B | C | C |
| Viscosity stability (slurry) | | | | B | B | D | B | D | B | D | D |
| Peel strength | | | | A | B | C | C | C | C | C | C |
| Cycle characteristics | | | | A | A | B | D | C | D | C | C |
| Inhibition of heat generation | | | | A | A | D | B | B | B | D | D |

It can be seen from Tables 1 to 3 that a slurry composition for a negative electrode having excellent viscosity stability and an electrochemical device having excellent cycle characteristics are obtained by using the conductive material pastes of Examples 1 to 19, which each contain a fibrous conductive carbon, a triazine skeleton-containing compound, a water-soluble polymer, and water and have amounts of the triazine skeleton-containing compound and the water-soluble polymer that are within specific ranges. It can also be seen that in Examples 1 to 19, dispersion stability of a conductive material paste is excellent, peel strength of an electrode is excellent, and heat generation can be sufficiently inhibited even in the event of an internal short circuit of an electrochemical device.

### INDUSTRIAL APPLICABILITY

According to the present disclosure, it is possible to provide a conductive material paste for an electrochemical device electrode with which it is possible to produce a slurry composition that has excellent viscosity stability and can cause an electrochemical device to display excellent cycle characteristics, and also to provide a method of producing this conductive material paste for an electrochemical device electrode.

Moreover, according to the present disclosure, it is possible to provide a slurry composition for an electrochemical device electrode that has excellent viscosity stability and can cause an electrochemical device to display excellent cycle characteristics.

Furthermore, according to the present disclosure, it is possible to provide an electrode for an electrochemical device that can cause an electrochemical device to display excellent cycle characteristics.

Also, according to the present disclosure, it is possible to provide an electrochemical device that has excellent cycle characteristics.

## Claims

1. A conductive material paste for an electrochemical device electrode, comprising a fibrous conductive carbon, a triazine skeleton-containing compound, a water-soluble polymer, and water, wherein
an amount of the triazine skeleton-containing compound is not less than 1 part by mass and not more than 50 parts by mass per 100 parts by mass of the fibrous conductive carbon, and
an amount of the water-soluble polymer is not less than 1 part by mass and not more than 50 parts by mass per 100 parts by mass of the fibrous conductive carbon.

2. The conductive material paste for an electrochemical device electrode according to claim 1, wherein the fibrous conductive carbon includes carbon nanotubes.

3. The conductive material paste for an electrochemical device electrode according to claim 1 or 2, wherein the fibrous conductive carbon has a BET specific surface area of not less than 10 m²/g and not more than 400 m2/g.

4. The conductive material paste for an electrochemical device electrode according to any one of claims 1 to 3, wherein the fibrous conductive carbon has an average length of not less than 1.0 µm and not more than 60.0 µm.

5. The conductive material paste for an electrochemical device electrode according to any one of claims 1 to 4, wherein the fibrous conductive carbon has an aspect ratio of not less than 50 and not more than 1,000.

6. The conductive material paste for an electrochemical device electrode according to any one of claims 1 to 5, wherein the water-soluble polymer includes a carboxy group-containing monomer unit in a proportion of not less than 1 mass% and not more than 50 mass% when all monomer units of the water-soluble polymer are taken to be 100 mass%.

7. The conductive material paste for an electrochemical device electrode according to any one of claims 1 to 6, wherein the triazine skeleton-containing compound has a molecular weight of 500 or less.

8. The conductive material paste for an electrochemical device electrode according to any one of claims 1 to 7, wherein the triazine skeleton-containing compound includes one or more functional groups selected from the group consisting of an amino group, a hydroxy group, a cyano group, and a thiol group.

9. A slurry composition for an electrochemical device electrode, comprising: an electrode active material; and the conductive material paste for an electrochemical device electrode according to any one of claims 1 to 8.

10. The slurry composition for an electrochemical device electrode according to claim 9, wherein the electrode active material includes an active material containing silicon.

11. An electrode for an electrochemical device, comprising an electrode mixed material layer formed using the slurry composition for an electrochemical device electrode according to claim 9 or 10.

12. An electrochemical device comprising the electrode for an electrochemical device according to claim 11.

13. A method of producing a conductive material paste for an electrochemical device electrode, comprising a step of mixing a fibrous conductive carbon, not less than 1 part by mass and not more than 50 parts by mass of a triazine skeleton-containing compound per 100 parts by mass of the fibrous conductive carbon, not less than 1 part by mass and not more than 50 parts by mass of a water-soluble polymer per 100 parts by mass of the fibrous conductive carbon, and water.

14. The method of producing a conductive material paste for an electrochemical device electrode according to claim 13, wherein the step of mixing includes: a step of producing a premix containing the fibrous conductive carbon, the triazine skeleton-containing compound, and the water; and a step of adding the water-soluble polymer to the premix.
